# EUROPÄISCHE PATENTSCHRIFT

(11) **EP 3 452 203 B1**
(45) Veröffentlichungstag und Bekanntmachung des Hinweises auf die Patenterteilung: **13.01.2021**
(21) Anmeldenummer: 17709087.5
(22) Anmeldetag: 07.03.2017
(51) Int. Cl.: B01D 46/24

(54) **RINGFÖRMIGES FILTERELEMENT, INSBESONDERE ZUR GASFILTRATION**
ANNULAR FILTER ELEMENT, IN PARTICULAR FOR GAS FILTRATION
ÉLÉMENT FILTRANT ANNULAIRE, EN PARTICULIER POUR LA FILTRATION DE GAZ

(30) Priorität: 03.05.2016 DE 102016005352
(43) Veröffentlichungstag der Anmeldung: 13.03.2019
(73) Patentinhaber: Mann+Hummel GmbH, 71636 Ludwigsburg (DE)
(72) Erfinder: FRANZ, Andreas, 71638 Ludwigsburg (DE); FRITZSCHING, Torsten, 71665 Vaihingen an der Enz (DE); DONAUER, Nadine, 70736 Fellbach (DE); HOLZWARTH, Marcel, Fayetteville, North Carolina 28304 (US); PEREIRA MADEIRA, Pedro Miguel, 74321 Bietigheim-Bissingen (DE); WITTMERS, Christoph, 74321 Bietigheim-Bissingen (DE); WINTER, Manfred, 74906 Bad Rappenau (DE); KRIEGER, Joachim-Paul, 94419 Reisbach (DE); GRUBER, Martin, 84140 Gangkofen (DE)
(74) Vertreter: Seyboth, Matthias
(86) Internationale Anmeldenummer: PCT/EP2017/055315
(87) Internationale Veröffentlichungsnummer: WO 2017/190874

(56) Entgegenhaltungen:
- EP-A1- 1 354 617
- EP-A1- 2 742 986
- DE-A1-102011 078 057
- DE-A1-102013 018 201

## Beschreibung

### Technisches Gebiet

Die Erfindung bezieht sich auf ein ringförmiges Filterelement, insbesondere zur Gasfiltration, beispielsweise für einen Luftfilter, nach dem Oberbegriff des Anspruches 1.

### Stand der Technik

Aus der DE 10 2007 017 091 A1 ist ein Ringfilterelement für einen Luftfilter einer Brennkraftmaschine bekannt, der einen ringförmigen Filtermediumkörper aufweist, welcher von der zu reinigenden Luft radial von außen nach innen durchströmt wird. Der Innenraum im Filtermediumkörper, der von einem Mittelrohr ausgekleidet ist, bildet den Reinraum, aus dem die gereinigte Luft axial abgeleitet wird. Das Mittelrohr ist im Bereich einer axialen Stirnseite mit einem sich radial nach außen erstreckenden Stützkragen versehen, der auf einer Endscheibe des Filtermediumkörpers aufliegt. Der Stützkragen weist einen axial überstehenden, ringförmig umlaufenden Abschnitt auf, der von einem Dichtungsmaterial ummantelt ist. Im eingesetzten Zustand im aufnehmenden Fiitergehäuse stützt sich ein Gehäusedeckel an dem Dichtungselement am Stützkragen des Filterelements ab.

Ferner ist aus der DE 10 2011 078 057 A1 ein polygonales Filterelement bekannt, das eine umlaufende Dichtung aufweist, die umlaufend an einen Filterbalg des Filterelements angefügt ist. In den Eckbereichen weist eine Dichtlinie der Dichtung einen größeren Abstand zum Filterbalg auf als auf dem restlichen Umfang, wodurch der Krümmungsradius der Dichtlinie in den Eckbereichen vergrößert wird.

### Offenbarung der Erfindung

Der Erfindung liegt die Aufgabe zugrunde, ein ringförmiges Filterelement mit einfachen konstruktiven Maßnahmen in der Weise auszubilden, dass über einen langen Betriebszeitraum Dichtigkeit zwischen Roh- und Reinseite gewährleistet ist.

Diese Aufgabe wird erfindungsgemäß mit den Merkmalen des Anspruches 1 gelöst. Die Unteransprüche geben zweckmäßige Weiterbildungen an.

Das erfindungsgemäße Filterelement ist ringförmig ausgebildet und wird radial von dem zu reinigenden Fluid durchströmt. Die Ringform des Filterelements umfasst kreisförmige, ovale und ovalisierte Grundquerschnitte sowie lang gestreckt ovale oder rechteckförmige Querschnitte mit gebogenen Schmalseiten, beispielsweise in Form von Halbkreisen, wobei die Längsseiten geradlinig oder konvex oder konkav gekrümmt sein können. Das ringförmige Filterelement umschließt einen Innenraum, der sich an die Reinseite eines Filtermediumkörpers des Filterelementes anschließt, an dem die Filtration des Fluids stattfindet. Das gereinigte Fluid wird aus dem innenraum in Achsrichtung des Filterelementes abgeleitet.

Das ringförmige Filterelement wird vorzugsweise zur Gasfiltration, beispielsweise als Luftfilter für Brennkraftmaschinen eingesetzt. Es kommt aber auch ein Einsatz zur Filtration von Flüssigkeiten in Betracht.

An der Stirnseite des Filtermediumkörpers des Filterelements ist ein umlaufendes Dichtungselement angeordnet, das im montierten Zustand des Filterelementes die Roh- von der Reinseite strömungsdicht separiert. Die Filtereinrichtung, zu der das Filterelement gehört, weist ein Filtergehäuse zur Aufnahme des Filterelementes auf, wobei das Filterelement in das Gehäusebauteil einsetzbar ist und sich das Dichtungselement an dem Gehäusebauteil abstützt.

Die Innenseite des Filtermediumkörpers kann gegebenenfalls von einem ein Stützgerüst bildenden Mittelrohr ausgekleidet sein.

Das umlaufende Dichtungselement an der Stirnseite des Filtermediumkörpers weist mindestens zwei Dichtungsabschnitte auf, die sich in ihrer Querschnittsfläche und gegebenenfalls auch in ihrer Querschnittsgeometrie voneinander unterscheiden. Mindestens ein Dichtungsabschnitt weist eine massiv ausgebildete, größere Querschnittsfläche und mindestens ein weiterer Dichtungsabschnitt eine mindestens teilweise reduzierte Querschnittsfläche auf, die gegenüber dem ersten Dichtungsabschnitt kleiner ausgebildet ist. Diese Ausführung hat den Vorteil, dass über die unterschiedliche Querschnittsfläche verschiedenen Beanspruchungen an das Dichtungselement Rechnung getragen werden kann. So ist es insbesondere möglich, an Dichtungsabschnitten mit geringerer Spannung eine reduzierte Querschnittsfläche und an Dichtungsabschnitten mit höherer Spannung eine größere Querschnittsfläche vorzusehen.

Der Dichtungsabschnitt mit reduzierter Querschnittsfläche hat eine größere Länge als der Dichtungsabschnitt mit größerer Querschnittsfläche. Insbesondere bei nicht-runden Querschnittsformen des Filterelementes und des Filtermediumkörpers, beispielsweise bei stark ovalen oder rechteckförmig mit abgerundeten Schmalseiten ausgebildeten Querschnittsformen, besitzen die beiden Längsseiten eine reduzierte Querschnittsfläche und die Schmalseiten, die mit einer verhältnismäßig starken Krümmung versehen sind, eine demgegenüber größere Querschnittsfläche. Die Schmalseiten besitzen eine höhere Eigenspannung als die Längsseiten, wobei die Längsseiten zur Stabilisierung vorteilhafterweise im montierten Zustand von einem Gehäusebauteil der Filtereinrichtung umgriffen und seitlich abgestützt sind.

In bevorzugter Ausführung weist das Filterelement bei einer ovalen oder rechteckförmigen Ausführung mit zwei Längsseiten und zwei die Längsseiten verbindenden Schmalseiten jeweils zwei Dichtungsabschnitte mit größerer Querschnittsfläche und zwei Dichtungsabschnitte mit demgegenüber reduzierter Querschnittsfläche auf, wobei an den Längsseiten die Dichtungsabschnitte mit reduzierter Querschnittsfläche und an den Schmalseiten die Dichtungsabschnitte mit größerer Querschnittsfläche verlaufen. Die gekrümmten Schmalseiten besitzen eine kürzere Länge als die Längsseiten mit geringerer oder ohne Krümmung und weisen eine höhere Eigenstabilität auf.

Erfindungsgemäß hat der Dichtungsabschnitt mit reduzierter Querschnittsfläche eine nutförmige Ausnehmung, die sich zumindest annähernd über die Länge dieses Dichtungsabschnittes erstreckt. Die Nut dient zur Aufnahme einer Stützrippe, die an der Innenseite des Gehäusebauteils angeordnet ist, in das das Filterelement einsetzbar ist. Diese Stützrippe stabilisiert den Dichtungsabschnitt mit reduzierter Querschnittsfläche und hält diesen in seiner Sollposition. Es können am Gehäusebauteil auch mehrere Stützrippen vorliegen, die sich beispielsweise auch lediglich über einen kleineren Längenabschnitt des Dichtungsabschnitts erstrecken können.

Gemäß einer weiteren vorteilhaften Ausführung befindet sich an der Dichtwand, die die nutförmige Ausnehmung begrenzt, eine Dichtwulst, der nach innen in die nutförmige Ausnehmung hineinragt. Im montierten Zustand liegt die Stützrippe in der nutförmigen Ausnehmung und drückt gegen den Dichtwulst, wodurch in Querrichtung - quer zur Längserstreckung des Dichtungsabschnittes - eine erhöhte Dichtkraft und verbesserte Dichtigkeit erzielt wird.

Gemäß einer weiteren vorteilhaften Ausführung weist der Dichtungsabschnitt mit reduzierter Querschnittsfläche mehrere aufeinander folgende Ausnehmungen auf. Diese können voneinander separiert sein. In die einzelnen Ausnehmungen kann gegebenenfalls auch jeweils eine Stützrippe an dem aufzusetzenden Gehäusebauteil hineinragen.

Gemäß noch einer weiteren Ausführung weist mindestens ein Dichtungsabschnitt mit reduzierter Querschnittsfläche einen massiv ausgebildeten, jedoch verjüngten Querschnitt auf. In dieser Ausführung sind sowohl der Dichtungsabschnitt mit größerer Querschnittsfläche als auch der Dichtungsabschnitt mit reduzierter Querschnittsfläche massiv ausgebildet. Der Dichtungsabschnitt mit verjüngtem Querschnitt lässt sich in vorteilhafter Weise an einer oder an beiden Seitenflächen von dem aufzusetzenden Gehäusebauteil umklammern.

Das Gehäusebauteil, in das das Filterelement eingesetzt wird und an dem sich das Dichtungselement axial abstützt, liegt vorteilhafterweise mit zumindest einer Wandseite seitlich an einer Dichtwand des Dichtungsabschnittes mit reduziertem Dichtungsquerschnitt an. Hierdurch wird in Querrichtung - quer zur Längserstreckung des Dichtungselementes - eine Abstützung des Dichtungselementes im Abschnitt mit reduzierter Querschnittsfläche erreicht. Vorteilhafterweise liegt jedoch nur die innen liegende Dichtwand an dem abstützenden Gehäusebauteil an, wohingegen die außen liegende Dichtwand des Dichtungsabschnittes mit reduziertem Dichtungsquerschnitt ein Spiel zum Gehäusebauteil aufweist. Diese Ausführung reduziert die Kräfte beim Einsetzen des Filterelements in das Gehäusebauteil und verhindert eine unkontrollierbare Verformung des Dichtungselementes.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: in perspektivischer Ansicht ein ringförmiges Filterelement mit einem Filtermediumkörper, der an seiner Stirnseite mit einem umlaufenden Dichtungselement versehen ist, welches an seinen teilkreisförmig gekrümmten Schmalseiten massiv und mit größerer Querschnittsfläche und an seinen Längsseiten mit nutförmigen Ausnehmungen und reduzierter Querschnittsfläche versehen ist.
- Fig. 2: einen Schnitt längs durch eine Filtereinrichtung mit dem Fiiterelement, eingesetzt in ein Filtergehäuse, das an seiner Innenseite eine Stützrippe aufweist, die in die nutförmige Ausnehmung im Dichtungselement einsetzbar ist,
- Fig. 3: eine Fig. 2 entsprechende Darstellung, jedoch in einer angenäherten Position von Stützrippe und Dichtungselement,
- Fig. 4: in vergrößerter Einzeldarstellung einen Schnitt durch das Dichtungselement und die vollständig eingesetzte Stützrippe des Gehäusebauteils.

In den Figuren sind gleiche Bauteile mit gleichen Bezugszeichen versehen.

### Ausführungsform(en) der Erfindung

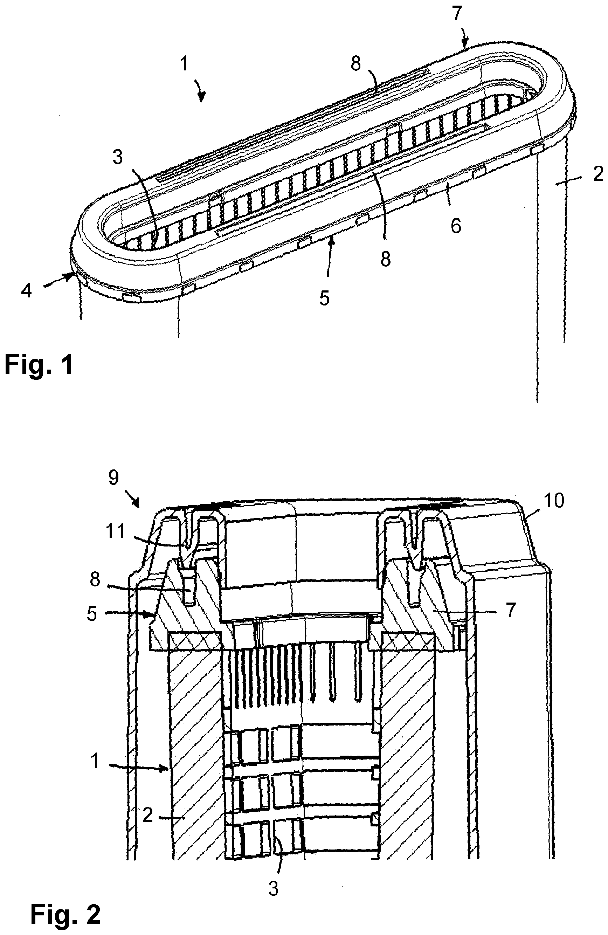

In Fig. 1 ist ein Filterelement 1 dargestellt, das vorzugsweise zur Gasfiltration, beispielsweise für einen Luftfilter im Ansaugtrakt einer Brennkraftmaschine eingesetzt wird. Das Filterelement 1 weist einen ringförmigen Filtermediumkörper 2 auf, an dem die Filtration des Gases stattfindet und der radial von außen nach innen von dem Gas durchströmt wird. Dementsprechend bildet der Innenraum im Filtermediumkörper den Reinraum zur Aufnahme des gereinigten Gases, das axial abgeleitet wird.

Die Innenseite des Filtermediumkörpers 2 ist von einem Stützgerüst 3 ausgekleidet, das vorzugsweise aus Kunststoff besteht und Längs- und Querstreben aufweist. Das Stützgerüst 3 stabilisiert den Filtermediumkörper 2.

Das Filterelement 1 mit dem Filtermediumkörper 2 ist ringförmig ausgebildet, es weist eine stark ovalisierte bzw. rechteckförmige Querschnittsform auf mit halbkreisförmig gekrümmten Schmalseiten 4 und geradlinig ausgebildeten Längsseiten 5. Es kommen auch ovale Ausführungen in Betracht, bei denen die Längsseiten 5 konvex nach außen gekrümmt sind, jedoch eine kleinere Krümmung als die Schmalseiten 4 besitzen.

Die Stirnseite des Filtermediumkörpers 2 ist von einer ringförmigen Endscheibe 6 abgedeckt, die Träger eines umlaufenden Dichtungselementes 7 ist. Das Dichtungselement 7 kann auf die Endscheibe 6 aufgespritzt, aufgeschäumt, als Dichtraupe aufgebracht oder in sonstiger Weise erzeugt werden. Im montierten Zustand in der Filtereinrichtung wird das Dichtungselement 7 axial von einem auf das Filtergehäuse aufsetzbaren Gehäusedeckel beaufschlagt, was figurativ nicht gezeigt ist, da der Gehäusedeckel beispielsweise an einem abgewandten Ende des Filtergehäuses vorliegen kann.

Das Dichtungselement 7 befindet sich vorteilhafterweise an der Reinseite des Filterelementes 1, über die das gereinigte Fluid aus dem Innenraum im Filtermediumkörper 2 axial abgeleitet wird.

In beide Längsseiten 5 ist eine nutförmige Ausnehmung 8 in das Dichtungselement 7 eingebracht. Die nutförmige Ausnehmung 8 befindet sich an der axialen Stirnseite des Dichtungselementes und erstreckt sich annähernd über die Länge der Längsseite 5.

Die Schmalseiten 4 sind massiv ausgeführt, sie weisen keine nutförmige Ausnehmung wie die Längsseiten 5 auf, Im Übrigen besitzen die Dichtungsabschnitte im Bereich der Schmalseiten und die Dichtungsabschnitte im Bereich der Längsseiten die gleiche Querschnittsform. Im Bereich der Längsseiten ist die Querschnittsfläche aufgrund der nutförmigen Ausnehmung 8 gegenüber der Querschnittsfläche an den Schmalseiten reduziert.

Die Endscheibe 6 und das Dichtungselement 7 können gegebenenfalls einteilig ausgebildet sein.

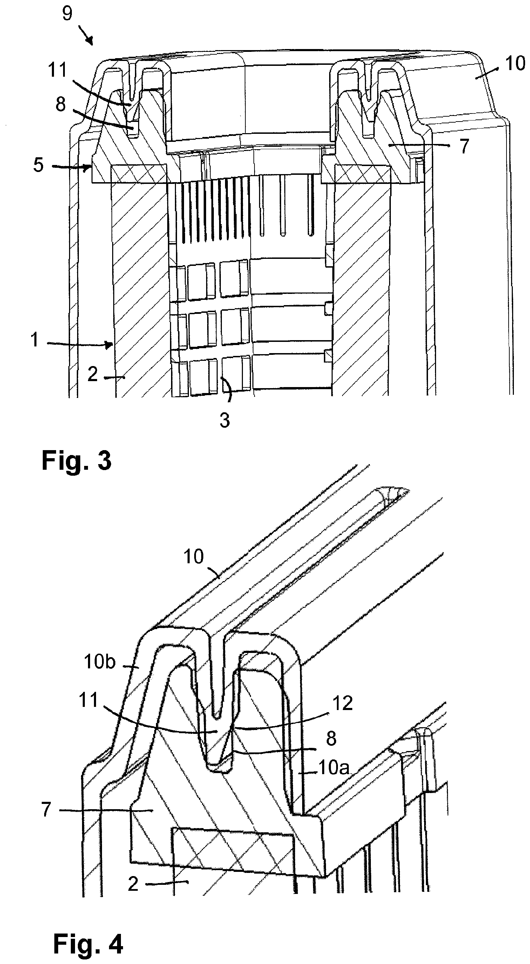

In den Fig. 2 bis 4 ist die Filtereinrichtung 9 mit dem Filterelement 1 dargestellt, das in ein Filtergehäuse eingesetzt ist. An einem der Stützrippe 11 abgewandten Ende des Filtergehäuses kann das Filtergehäuse mit einem Deckel verschlossen sein, was figurativ nicht gezeigt ist. An der Innenseite des Gehäusebauteils 10 ist eine nach innen einragende Stützrippe 11 angeformt, die in die nutförmige Ausnehmung 8 im Dichtungselement 7 im Bereich der Längsseiten 5 einführbar ist. Die Stützrippe 11 erstreckt sich entsprechend der Ausführung der nutförmigen Ausnehmung 8 im Dichtungselement 7 nur entlang der Längsseiten, nicht jedoch entlang der Schmalseiten an der Innenseite des Gehäusebauteils 10. Fig. 2 zeigt das Gehäusebauteil 10 zu Beginn des Einführvorganges der Stützrippe 11 in die nutförmige Ausnehmung 8, Fig. 3 im teilweise eingeführten Zustand und Fig. 4 im vollständig eingeführten Zustand.

Die Stützrippe 11 unterteilt die Innenseite des Gehäusebauteils 10 im Bereich, in den das Dichtungselement 7 eingesetzt wird, in zwei radial benachbarte Kammern, die jeweils eine Dichtwand des Dichtungselementes umgreifen, wobei die beiden Dichtwände von der nutförmigen Ausnehmung 8 separiert sind. Wie insbesondere Fig. 4 zu entnehmen, ist an der Außenseite der innen liegenden Dichtwand auf der der nutförmigen Ausnehmung 8 zugewandten Seite ein Dichtwulst 12 angeformt, der sich in Richtung der nutförmigen Ausnehmung 8 erstreckt und an dem die Stützrippe 11 des Gehäusebauteils 10 anliegt. Der Dichtwulst 12 ragt in Querrichtung in die nutförmige Ausnehmung 8 hinein und wird von der Stützrippe 11 entsprechend in Querrichtung beaufschlagt, wodurch eine erhöhte Dichtwirkung gegeben ist. Die innen liegende Dichtwand wird auch auf ihrer innen liegende Seite von einer Wandung 10a des Gehäusebauteils 10 beaufschlagt. Dagegen liegt die außen liegende Wandung 10b des Gehäusebauteils 10 auf Abstand zur Außenseite der außen liegenden Dichtwand. Durch diese Ausführung ist sichergestellt, dass die Kräfte, die auf das Dichtungselement 7 beim Einsetzen in das Gehäusebauteil 10 in Achs- und in Querrichtung wirken, nicht zu einer unzulässigen Verformung des Dichtungselementes 7 führen.

Die innen liegende Wandung 10a des Gehäusebauteils 10beaufschlagt das Dichtungselement 7 auch an der Schmalseite. Dagegen liegt die außen liegende Wandung 10b des Gehäusebauteils 10 auch an der Schmalseite auf Abstand zum Dichtungselement 7.

## Patentansprüche

1. Ringförmiges Filterelement, insbesondere zur Gasfiltration, beispielsweise für einen Luftfilter, mit einem Filtermediumkörper (2), der in Radialrichtung von dem zu reinigenden Fluid durchströmbar ist, wobei an der Stirnseite des Filtermediumkörpers (2) ein umlaufendes Dichtungselement (7) angeordnet ist, das mindestens einen Dichtungsabschnitt mit massiver und größerer Querschnittsfläche und mindestens einen weiteren Dichtungsabschnitt mit einer mindestens teilweise reduzierten Querschnittsfläche aufweist, wobei mindestens ein Dichtungsabschnitt mit reduzierter Querschnittsfläche eine nutförmige Ausnehmung (8) aufweist, die sich zumindest annähernd über die Länge oder über einen Teil der Länge des Dichtungsabschnitts mit reduzierter Querschnittsfläche erstreckt, wobei der Filtermediumkörper (2) zwei Längsseiten (5) und zwei die Längsseiten (5) verbindende Schmalseiten (4) aufweist, **dadurch gekennzeichnet, dass** die Ausnehmung (8) an einer axialen Stirnseite des Dichtungselements (7) vorliegt und sich der Dichtungsabschnitt mit reduzierter Querschnittsfläche entlang der Längsseite (5) und der Dichtungsabschnitt mit größerer Querschnittsfläche entlang der Schmalseite (4) erstreckt.

2. Filterelement nach Anspruch 1, **dadurch gekennzeichnet, dass** der Dichtungsabschnitt mit reduzierter Querschnittsfläche eine größere Länge als der Dichtungsabschnitt mit größerer Querschnittsfläche aufweist.

3. Filterelement nach Anspruch 1 oder 2, **dadurch gekennzeichnet, dass** der Filtermediumkörper (2) oval oder ovalisiert ausgebildet ist.

4. Filterelement nach Anspruch 1 oder 2, **dadurch gekennzeichnet, dass** der Filtermediumkörper (2) rechteckförmig, jedoch mit gebogenen Schmalseiten (4) ausgebildet ist.

5. Filterelement nach einem der Ansprüche 1 bis 4, **dadurch gekennzeichnet, dass** an mindestens einer die nutförmige Ausnehmung (8) begrenzenden Dichtwand ein Dichtwulst (12) angeordnet ist.

6. Filterelement nach einem der Ansprüche 1 bis 5, **dadurch gekennzeichnet, dass** mindestens ein Dichtungsabschnitt mit reduzierter Querschnittsfläche mehrere aufeinander folgende Ausnehmungen aufweist.

7. Filterelement nach einem der Ansprüche 1 bis 6, **dadurch gekennzeichnet, dass** mindestens ein Dichtungsabschnitt mit reduzierter Querschnittsfläche ohne Ausnehmungen oder Nuten, jedoch mit verjüngtem Querschnitt ausgebildet ist.

8. Filtereinrichtung, insbesondere Gasfilter, beispielsweise Luftfilter, mit einem Filterelement (1) nach einem der Ansprüche 1 bis 7 und mit einem Filtergehäuse zur Aufnahme des Filterelements (1), wobei das Filterelement (1) in das Filtergehäuse einsetzbar ist und sich das Dichtungselement (7) an einem Gehäusebauteil (10) abstützt.

9. Filtereinrichtung nach Anspruch 8, **dadurch gekennzeichnet, dass** das Gehäusebauteil (10) den Dichtungsabschnitt mit reduziertem Dichtungsquerschnitt zumindest abschnittsweise quer zur Längserstreckung des Dichtungselements (7) abstützt.

## Claims

1. Annular filter element, in particular for gas filtration, for example for an air filter, having a filter medium body (2) which can be flowed through in the radial direction by the fluid to be cleaned, wherein a circumferential sealing element (7), which features at least one sealing portion having a solid and larger cross-sectional area and at least one further sealing portion having an at least partially reduced cross-sectional area, is disposed on the front face of the filter medium body (2), wherein at least one sealing portion having reduced cross-sectional area features a groove-shaped recess (8) which extends at least approximately over the length or over one part of the length of the sealing portion having reduced cross-sectional area, wherein the filter medium body (2) features two longitudinal sides (5) and two narrow sides (4) connecting the longitudinal sides (5), **characterized in that** the recess (8) is provided on an axial front face of the sealing element (7) and the sealing portion having reduced cross-sectional area extends along the longitudinal side (5) and the sealing portion having larger cross-sectional area along the narrow side (4).

2. Filter element according to claim 1, **characterized in that** the sealing portion having reduced cross-sectional area is longer than the sealing portion having larger cross-sectional area.

3. Filter element according to claim 1 or 2, **characterized in that** the filter medium body (2) is oval or ovalized.

4. Filter element according to claim 1 or 2, **characterized in that** the filter medium body (2) has a rectangular shape, however having bent narrow sides (4).

5. Filter element according to one of the claims 1 to 4, **characterized in that** a sealing bead (12) is disposed at least on one sealing wall limiting the groove-shaped recess (8).

6. Filter element according to one of the claims 1 to 5, **characterized in that** at least one sealing portion having a reduced cross-sectional area features several successive recesses.

7. Filter element according to one of the claims 1 to 6, **characterized in that** at least one sealing portion having a reduced cross-sectional area is designed without recesses or grooves, however having tapered cross section.

8. Filtering device, in particular gas filter, for example air filter, having a filter element (1) according to one of the claims 1 to 7 and having a filter housing for receiving the filter element (1), wherein the filter element (1) is introducible into the filter housing and the sealing element (7) is supported by a housing component (10).

9. Filtering device according to claim 8, **characterized in that** the housing component (10) supports the sealing portion having reduced sealing cross section at least sectionwise transversely to the longitudinal extension of the sealing element (7).

## Revendications

1. Élément filtrant annulaire, notamment destiné à la filtration de gaz, par exemple pour un filtre à air, ayant un corps de milieu filtrant (2) pouvant être parcouru en sens radial par le fluide à filtrer, un élément d'étanchéité (7) circonférentiel étant disposé sur la face frontale du corps de milieu filtrant (2), ledit élément d'étanchéité présentant au moins une section d'étanchéité ayant une surface de la section transversale massive et plus grande et au moins une autre section d'étanchéité ayant une surface de la section transversale au moins partiellement réduite, une section d'étanchéité ayant une surface de la section transversale réduite présentant un évidement en forme de nervure (8) qui s'étend au moins quasiment sur toute la longueur ou sur une partie de la longueur de la section d'étanchéité ayant une surface de la section transversale réduite, le corps de milieu filtrant (2) présentant deux côtés longitudinaux (5) et deux côtés étroits (4) reliant les côtés longitudinaux (5), **caractérisé en ce que** l'évidement (8) est situé sur une face frontale axiale de l'élément d'étanchéité (7) et que la section d'étanchéité ayant une surface de la section transversale réduite s'étend le long du côté longitudinal (5) et la section d'étanchéité ayant une surface de la section transversale plus grande s'étend le long du côté étroit (4).

2. Élément filtrant selon la revendication 1, **caractérisé en ce que** la longueur de la section d'étanchéité ayant une surface de la section transversale réduite est supérieure à celle de la section d'étanchéité ayant une surface de la section transversale plus grande.

3. Élément filtrant selon la revendication 1 ou 2, **caractérisé en ce que** le corps de milieu filtrant (2) est ovale ou ovalisé.

4. Élément filtrant selon la revendication 1 ou 2, **caractérisé en ce que** le corps de milieu filtrant (2) est rectangulaire, mais ayant des côtés étroits courbes (4).

5. Élément filtrant selon l'une des revendications 1 à 4, **caractérisé en ce qu'**un bourrelet d'étanchéité (12) est disposé sur au moins une paroi d'étanchéité limitant l'évidement en forme de rainure (8).

6. Élément filtrant selon l'une des revendications 1 à 5, **caractérisé en ce qu'**au moins une section d'étanchéité ayant une surface de la section transversale réduite présente plusieurs évidements successifs.

7. Élément filtrant selon l'une des revendications 1 à 6, **caractérisé en ce qu'au** moins une section d'étanchéité ayant une surface de la section transversale réduite ne comporte pas d'évidements ou de rainures, mais ayant une surface de la section transversale rétrécie.

8. Dispositif de filtration, notamment filtre à gaz, par exemple filtre à air, ayant un élément filtrant (1) selon l'une des revendications 1 à 7 et ayant un boîtier de filtre destiné à réceptionner l'élément filtrant (1), l'élément filtrant (1) pouvant être introduit dans le boîtier de filtre et l'élément d'étanchéité (7) s'appuyant sur un composant de boîtier (10).

9. Dispositif de filtration selon la revendication 8, **caractérisé en ce que** le composant de boîtier (10) soutient la section d'étanchéité ayant une surface de la section transversale réduite, au moins dans certaines zones, en travers la longueur de l'élément d'étanchéité (7).
